# EUROPEAN PATENT APPLICATION

(11) **EP 4 234 066 A1**
(43) Date of publication of application: **30.08.2023**
(21) Application number: 23158117.4
(22) Date of filing: 23.02.2023
(51) Int. Cl.: B01D 46/00

(54) **PLASTIC SNAP-FIT PROFILE JOINING FLEXIBLE MATERIALS, ESPECIALLY FILTER MATERIALS**

(30) Priority: 23.02.2022 PL 44043922
(71) Applicant: Profplast Spolka z Ograniczona Odpowiedzialnoscia, 28-350 Slupia (PL)
(72) Inventor: Malcherek, Andrzej, 41-250 Czeladz (PL); Wolniak, Arkadiusz, 41-200 Sosnowiec (PL)
(74) Representative: AOMB Polska Sp. z.o.o.

(57) **Abstract**

The subject matter of the present invention is a profile for clamping filter materials in pocket filters. The profile (1) comprises a profile base part with a substantially E-shaped cross-section, said profile base part of the profile has an upper arm (2), a lower arm (3) and a middle arm (4), wherein the lower arm (3) has a first hook-shaped protrusion (5), and the middle arm (4) has a second hook-shaped protrusion (6), wherein the hook-shaped protrusions (5, 6) protrude toward the space between the lower arm (3) and the middle arm (4) forming a socket (7) for receiving a snap-fit element, characterized in that a profile clamping part (8), configured for taking up an open position and a closed position, is pivotally connected with the upper arm (2), wherein the profile clamping part (8) has a snap-fit arm (9) for insertion into the socket (7), the snap-fit arm (9) having an upper (10) and a lower (11) hook-shaped protrusion in the form of a double hook, which, together with the hook-shaped protrusions (5, 6) of the lower arm (3) and the middle arm (4), forms a snap-fit connection.

## Description

### Technical field

The invention relates to a plastic profile for joining flexible materials, in particular flat sheets of fibrous materials, especially non-woven filter fabrics used in pocket filters.

### Background art

EP1579904B1 discloses a plastic profile for joining flexible fibrous materials, especially non-woven filter fabrics. The disclosed profile is one half of a snap fastener enabling the fibrous material to be clamped. To attach the fibrous material, it is necessary to use two identical profiles of this type and join them by placing a non-woven fabric between the profiles.

The prior art solutions require manipulation of three elements simultaneously when attaching the fibrous material and securing the upper snap fastener against accidental placement of the fibrous material because of the absence of a restricting element. Incorrect placement of the non-woven fabric may cause the lower part of the profile to not close after fixing, because the snap fastener is blocked by the non-woven fabric.

### Objective of the invention

The objective of the present invention is to provide a profile for joining flexible materials, in particular flat sheets of fibrous materials, which will be free of the above disadvantages.

### Summary of the invention

A snap-fit profile for joining flexible materials, in particular filter materials, according to the invention, comprising a profile base part with a substantially E-shaped cross-section, said profile base part has an upper arm, a lower arm and a middle arm, wherein the lower arm has a first hook-shaped protrusion, and the middle arm has a second hook-shaped protrusion, wherein the hook-shaped protrusions protrude toward the space between the lower arm and the middle arm forming a socket for receiving a snap-fit element. The invention is characterized in that a profile clamping part, configured for taking up an open position and a closed position, is pivotally connected with the upper arm, wherein the profile clamping part has a snap-fit arm for insertion into the socket, the snap-fit arm having an upper and a lower hook-shaped protrusion in the form of a double hook, which, together with the hook-shaped protrusions of the lower arm and the middle arm, forms a snap-fit connection.

In one embodiment of the invention, the profile clamping part is made of the same material as the profile, and preferably the profile clamping part and the profile form a single monolithic piece.

In a preferred embodiment, between the profile clamping part and the profile there is a longitudinal constriction forming an articulated connection. This constriction extends in the profile axis, and a narrow strip of material connecting both parts determines the axis of rotation.

Preferably, the profile clamping part has a shape similar to the letter L, where after joining the profile base part with the profile clamping part, the cross-section of the profile is rectangular shaped, i.e. there is a right angle between the upper arm and the elongated (vertical) section of the profile clamping part.

Preferably, the profile clamping part has an additional lower arm. There is a gap between the additional lower arm and the lower arm in the closed position of the profile.

Between the snap-fit arm and the lower arm and the middle arm, in the closed state of the profile, there are gaps for introducing fibrous materials.

In one embodiment, the upper hook-shaped protrusion is longer than the lower hook-shaped protrusion and the lower arm is shorter than the middle arm.

### Brief description of the Drawings

The invention will be explained in more details in a preferred embodiment together with the accompanying drawings, wherein:
Fig. 1 - shows schematically a cross-section of the profile in the open position.
Fig. 2 - shows schematically a cross-section of the profile in the closed position.
Fig. 3 - shows schematically a cross-section of the profile in the open position with a fibrous material inserted.
Fig. 4 - shows schematically a cross-section of the profile in the closed position with a fibrous material inserted.

### Detailed description of the embodiment

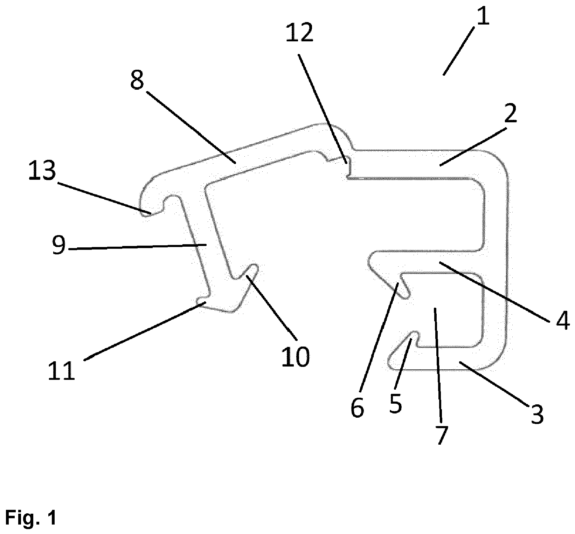

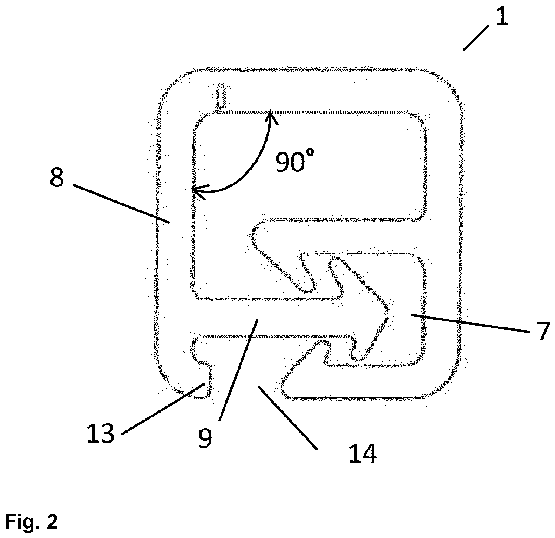

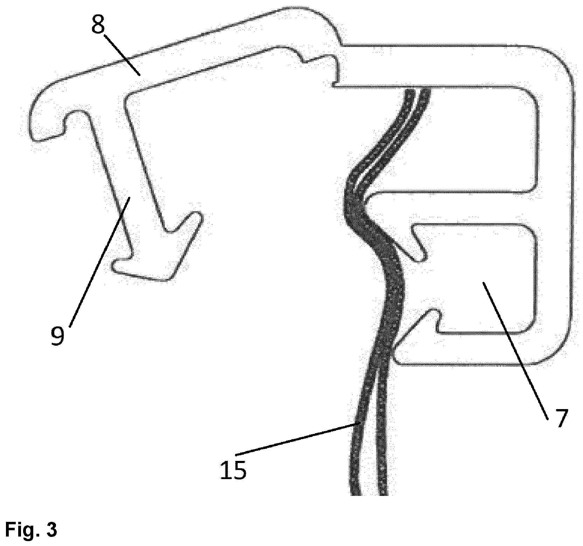

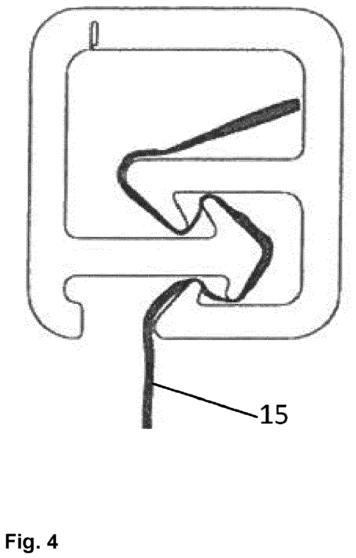

A preferred embodiment of the snap-fit profile which serves to clamp the nonwoven filter materials in the pocket filters will now be described with reference to the accompanying Figs. 1-4.

According to this preferred embodiment, the snap-fit profile 1 is made of plastic. The profile 1 consists of a profile base part and a profile clamping part 8. The profile base part has a body which in the cross-section resembles the shape of the letter E, i.e. it has an upper arm 2, a lower arm 3 and a middle arm 4. On the lower arm 3 there is a first hook-shaped protrusion 5. A second hook-shaped protrusion 6 is on the middle arm 4. The hook-shaped protrusions 5 and 6 face each other and protrude toward the centre of the space delimited by the vertical section of the letter E, the lower arm 3 and the upper arm 4, thus forming a socket 7 for receiving a snap-fit arm 9 of the profile clamping part 8.

The profile clamping part 8, which can be moved between the open position to the closed position, is articulated with the upper arm 2. The articulated connection is preferably an elastic (flexible) joint made by means of a constriction 12 of the profile 1, which allows the profile clamping part 8 to rotate around the axis of rotation, which coincides with a narrow section of the profile 1 formed by the longitudinal constriction 12 and extends in the axis of the profiles 1. The profile clamping 8 has a snap-fit arm 9 for insertion into the socket 7, which snap-fit arm 9 has an upper hook-shaped protrusion 10 and a lower hook-shaped protrusion 11. The protrusions 10 and 11 are in the form of a double-sided hook or a double-pointed hook. Their task, after placing the snap-fit arm 9 in the socket 7, is to form a snap-fit connection with the cooperating protrusions 5 and 6 of the lower arm 3 and the middle arm 4. Preferably, the upper hook-shaped protrusion 10 is longer than the lower one 11 and the lower arm 3 is shorter than the middle arm 4. Differences in the lengths of the said elements result from the movement of the profile clamping part 8 imposed by the articulated connection. Thanks to the articulated connection, the elements of the profile clamping part 8 move along an arc, and also, the snap-fit arm 9 is inserted into the socket 7 along an arc. The first protrusion 5 and the second protrusion 6 start to cooperate with the upper protrusion 10 and the lower protrusion 11 at different times (in different positions) during closing the profile 1. These differences and a different pressure force (resulting from converting the torque needed to close the profile 1 into a pressure force inversely proportional to the length of the lever arm) acting on protrusions 6 and 10 located closer to the axis of rotation of the profile clamping part 8 in relation to protrusions 11 and 5 located further from the axis of rotation of the profile clamping part 8 determine the different lengths of these protrusions.

In a preferred embodiment, the profile clamping part 8 has an additional lower arm 13.

Between the additional lower arm 13 and the lower arm 3 of the profile base part, in the closed position of the profile 1, there is a gap 14.

Moreover, between the snap-fit arm 9 and the lower arm 3 and the middle arm 3, in the closed state of the profile 1, there are gaps for inserting the fibrous filter material 15.

In a preferred embodiment, the profile clamping part 8 is made of the same material as the profile base part.

In a preferred embodiment, the profile clamping part 8 and the profile base part of the profile 1 form a single monolithic piece.

In other preferred embodiments, the articulated connection is created by means of external elements, e.g. adhesive tapes or attached rotating or flexible hinge elements made of elastic, flexible or other kinking resistant materials.

## Claims

1. A snap-fit profile (1) for joining flexible materials, in particular filter materials, comprising a profile base part with a substantially E-shaped cross-section, said profile base part of the profile has an upper arm (2), a lower arm (3) and a middle arm (4), wherein the lower arm (3) has a first hook-shaped protrusion (5), and the middle arm (4) has a second hook-shaped protrusion (6), wherein the hook-shaped protrusions (5, 6) protrude toward the space between the lower arm (3) and the middle arm (4) forming a socket (7) for receiving a snap-fit element, **characterized in that** a profile clamping part (8), configured for taking up an open position and a closed position, is pivotally connected with the upper arm (2), wherein the profile clamping part (8) has a snap-fit arm (9) for insertion into the socket (7), the snap-fit arm (9) having an upper (10) and a lower (11) hook-shaped protrusion in the form of a double hook, which, together with the hook-shaped protrusions (5, 6) of the lower arm (3) and the middle arm (4), forms a snap-fit connection.

2. The profile according to claim 1, **characterized in that** the profile clamping part (8) is made of the same material as the profile (1).

3. The profile according to either claim 1 or 2, **characterized in that** the profile clamping part (8) and the profile (1) form a single monolithic piece.

4. The profile according to claim 3, **characterized in that** between the profile clamping part (8) and the profile (1) there is a longitudinal constriction (12) forming an articulated connection.

5. The profile according to either claim 1, 2, 3 or 4, **characterized in that** the profile clamping part (8) has a shape similar to the letter L, where after joining the profile base part with the profile clamping part (8), the cross-section of the profile (1) is rectangular shaped.

6. The profile according to any claim 1 to 5, **characterized in that** the profile clamping part (8) has an additional lower arm (13).

7. The profile according to claim 6, **characterized in that** there is a gap (14) between the additional lower arm (13) and the lower arm (3) in the closed position of the profile (1).

8. The profile according to any claim 1 to 7, **characterized in that** between the snap-fit arm (9) and the lower arm (3) and the middle arm (4), in the closed state of the profile (1), there are gaps for introducing fibrous materials (15).

9. The profile according to any claim 1 to 8, **characterized in that** the upper hook-shaped protrusion (10) is longer than the lower hook-shaped protrusion (11) and the lower arm (3) is shorter than the middle arm (4).
